# EUROPEAN PATENT SPECIFICATION

(11) **EP 2 589 795 B1**
(45) Date of publication and mention of the grant of the patent: **04.03.2015**
(21) Application number: 11187862.5
(22) Date of filing: 04.11.2011
(51) Int. Cl.: F03D 1/00, F03D 1/06

(54) **Lifting frame for lifting a wind turbine rotor blade and method of mounting wind turbine rotor blades**
Heberahmen zum Anheben eines Windturbinenrotorblatts und Verfahren zur Montage von Windturbinenrotorblätter
Cadre de levage pour lever une pale de rotor d'éolienne et procédé de montage de pales de rotor d'éolienne

(43) Date of publication of application: 08.05.2013
(73) Proprietor: Siemens Aktiengesellschaft, 80333 München (DE)
(72) Inventor: Falkenberg, Peter Loevenskjold, 7400 Herning (DK); Poulsen, Henning, 6900 Skjern (DK); Stiesdal, Henrik, 5000 Odense C (DK); Boegelund, Anders, 7100 Vejle (DK); Danielsen, Michael, 8400 Ebeltoft (DK); Hinrichsen, Troels, 8200 AArhus N (DK)

(56) References cited:
- EP-A1- 2 345 811
- US-A1- 2005 019 166
- US-A1- 2011 094 987

## Description

The present invention relates to a method of mounting three wind turbine rotor blades to a wind turbine hub on a nacelle located at the top of a wind turbine tower. In addition, the invention relates to a lifting frame for lifting a wind turbine rotor blade to a rotor hub by use of a lifting device.

When mounting a wind turbine rotor to a wind turbine often assembling the blades and the hub is done on the ground and the blade/hub assembly is then lifted to a nacelle on top of a wind turbine tower by use of a crane. However, with the wind turbine rotor blades, and hence the rotors, becoming larger the area needed for mounting the rotor blades to the hub on the ground is a constraining factor. A further constraining factor is the size of the crane that is needed for mounting large rotor blade/hub assemblies in one piece to the nacelle.

A further drawback of mounting the assembled rotor in one piece to the nacelle is that the rotor needs to be turned by 90° in mid air. With large rotors this is a rather difficult task.

Moreover, assembling the rotor before mounting it to the nacelle is difficult if the wind turbine is seabased.

Hence, it has been proposed to premount the hub to the nacelle and then lift the blades individually to the hub for mounting them. To do so, the mounting procedure comprises the steps of rotating the rotor hub to an orientation such that the first blade can be mounted, then rotating the rotor hub further to a position which allows for mounting the second rotor blade and then again rotating the rotor hub to a position which allows for mounting the third rotor blade.

Two different ways of mounting the blades to the hub are known. For example, US 2005/0019166 A1 discloses a method in which the rotor blades are mounted to a hub at the nacelle in a vertical orientation. The rotor blades are held by a frame comprising a clamping device for clamping the blade. By use of wires the blade is tilted from the horizontal orientation to the vertical orientation after it has been lifted off the ground. The other way of mounting rotor blades to a hub at the nacelle is to mount the blades in the horizontal orientation. This is, for example, described in US 2006/0147308 A1. When mounting the blade in horizontal orientation it is not necessary to tilt the blade. Like in the case of mounting the rotor blades in the vertical orientation lifting frames may be used for mounting the rotor blades in the horizontal orientation. Such lifting frames are, for example, disclosed in US 2011/0094987 A1, EP 1 925 582 B1, EP 1 925 583 B1 and EP 2 084 098 B1.

While, according to this state of the art methods of mounting wind turbine rotor blades, all rotor blades where mounted to the hub with the same orientation and the hub is rotated to the respective positions the blades can alternatively be mounted with individual orientations adapted to the orientation of the respective mounting sections of the hub, as it is disclosed in EP 2 345 811 A1. This is advantageous in that the inventive method overcomes the need of rotating the rotor hub when mounting the wind turbine rotor blades. Rotating the rotor hub is a rather difficult task to perform in gearless direct drive wind turbines. This method is therefore particularly suited for mounting wind turbine rotor blades to hubs premounted to a nacelle located on the top of a wind turbine tower in such gearless direct drive wind turbines.

With respect to the mentioned state of the art it is an objective of the present invention to provide an advantageous method of mounting wind turbine rotor blades to a rotor hub on a nacelle located at the top of a wind turbine tower. It is a further objective of the present invention to provide a lifting frame which allows for an advantageous method of mounting wind turbine rotor blades to a rotor hub located at a nacelle on top of a wind turbine tower.

The first objective is achieved by a method of mounting wind turbine rotor blades as claimed in claim 1. The second objective is achieved by a lifting frame as claimed in claim 2. The depending claims contain further developments of the invention.

According to the inventive method, the rotor blades are mounted to a rotor hub that comprises blade mounting sections while the hub is already mounted to a nacelle located at the top of a wind turbine tower. The rotor hub is kept in a same fixed rotational position for all rotor blades and the blades are tilted by individual tilt angles for mounting them to the mounting sections of the rotor hub. The inventive method comprises the steps of:
a) lifting the first rotor blade from the ground;
b) tilting the first rotor blade by approximately +60° or -60° with respect to the horizontal (please note that approximately + 60° or -60° shall mean that deviations from these angles by ±10°, in particular by ±5° shall be allowable);
c) fixing the first rotor blade to the wind turbine hub with the blade being tilted by approximately +60° or -60° with respect to the horizontal;
d) lifting the second rotor blade from the ground;
e) tilting the second rotor blade by approximately -60° with respect to the horizontal if the fist rotor blade was tilted by approximately +60° with respect to the horizontal, or tilting the second rotor blade by approximately +60° with respect to the horizontal if the first rotor blade was tilted by approximately -60° with respect to the horizontal;
f) fixing the second rotor blade to the wind turbine hub with the blade being tilted by approximately -60° or +60° with respect to the horizontal;
g) lifting the third rotor blade from the ground;
h) fixing the third rotor blade to the wind turbine hub with the blade being substantially aligned with the horizontal.

In order to avoid moving the crane between mounting of different rotor blades it is advantageous if the nacelle is rotated about a yaw angle of 180° before the rotor blade is mounted to the rotor hub.

In the inventive method, the first and second rotor blades are pitched to a first pitch angle of 20 degree with respect to the vertical and the third blade is pitched to a second pitch angle of 110 degree with respect to the vertical.

In the inventive method, no wind turbine rotor blade needs to be tilted more than about 60° with respect to the horizontal. This means that the equipment used for lifting and mounting the rotor blade does not need to be suitable for tilting the wind turbine rotor blades by an angle larger than about 60°. Hence, the equipment can be kept simpler than in other implementations, which would mean tilting at least one of the blades by more than 60°. Please note that the larger the tilt angle is the more vertical space is needed for performing the tilting action which in turn means that longer wires for bearing the blade are needed.

When tilting the first two rotor blades by +60° and -60°, respectively, or vice versa both blades can be mounted from the same side of the hub. The third blade, which is then mounted in the horizontal orientation, would need to be mounted from the other side of the rotor hub. To avoid moving the crane to the other side of the wind turbine the nacelle is rotated by 180° so that the mounting section that was turned away from the crane will then be turned towards the crane.

According to the invention the blade is pitched after lifting it from the ground to a certain pitch angle. Pitching the blade allows for keeping the pitch angle of the blade mounting sections of the rotor hub fixed during the whole mounting procedure. Due to the rotation of the nacelle by 180°, with the pitch angle of 110 degree the third blade shows the same pitch angle relative to its mounting section of the rotor hub as the first two blades with respect to their mounting sections, which first two blades are pitched to a pitch angle of 20 degree.

According to a second aspect of the present invention a lifting frame for lifting a wind turbine rotor blade to a rotor hub by use of a lifting device is provided. The lifting frame is adapted for performing the inventive method. It comprises a main frame with a fixture for fixing a wind turbine rotor blade to the main frame, a sub frame with means for fixing the sub frame to a lifting device, e.g. a crane, and at least two tilt wires that extend from the sub frame to the main frame. The main frame has a root end showing towards the root of a rotor blade fixed to the main frame and a tip end showing towards the tip of a rotor blade fixed to the main frame. At least one of the tilt wires is connected to a location at the tip end of the main frame and at least one of tilt wires is connected to a location at the root end of the main frame. The length of the at least one tilt wire connected to a location at the root end and the length of the at least one tilt wire connected to a location at the tip end are adjustable relative to each other. In addition, the main frame comprises a suction side part located at the suction side of a rotor blade fixed to the main frame. In addition, at least one pitch wire is present which extends from the sub frame to the main frame and which is connected to a location at the suction side part of the main frame.

By adjusting the lengths of the tilt wires relative to each other the main frame with a blade fixed thereto can be tilted to a desired tilt angle. This allows for adapting the tilt angle of the blade during mounting it to the rotor hub to the orientation of the mounting section of the rotor hub to which the blade is to be mounted.

By means of the pitch wire the pitch angle of the blade can be adapted to the pitch orientation of the mounting section to which it is to be mounted. Hence, in this implementation of the inventive lifting frame neither a rotation of the rotor hub nor a pitching rotation of the mounting sections of the rotor hub is necessary.

To achieve adjustment of the lengths of the tilt wires the sub frame may comprise a winch arrangement with at least one winch that is operatively connected to at least the tilt wire or tilt wires connected to a location at the root end of the main frame or at least to the tilt wire or tilt wires connected to the location at the tip end of the main frame. In particular, the winch arrangement may comprise two winches, one of which is operatively connected to the tilt wire or tilt wires connected to the location at the root end of the main frame and the other one of which is operatively connected to the tilt wire or tilt wires connected to a location at the tip end of the main frame. While, in general, it would be sufficient if only the length of the tilt wire or tilt wires at the tip end or at the root end of the main frame is adjustable it is advantageous if both, the tilt wire or tilt wires at the root end and the tilt wire or tilt wires at the tip end are adjustable in their length. Compared with only the wire or wires at one end of the frame being adjustable in their length making the wires at both ends of the frame adjustable in their length allows for achieving the same tilt angle range with shorter wires.

Moreover, the main frame may further comprise a pressure side part. Then, the location at the root end of the main frame and the location at the tip end of the main frame to which the tilt wires are connected can be situated on the pressure side part of the main frame.

In an advantageous development of the inventive lifting frame the shapes and dimensions of the main frame and of the fixture are such that the main frame can hold a rotor blade with the center of gravity of the rotor blade being located between the root end of the main frame and the tip end of the main frame. In particular, the center of gravity may be located in the middle between the tip end and the root end. By this measure the load can be evenly distributed do the wires at both ends of the frame. In this development of the lifting frame the locations situated on the pressure side part of the main frame are chosen such that, due to the gravitational force acting on the center of gravity of the rotor blade, the chord line of the blade includes a first pitch angle with the vertical if the at least one pitch wire is slack. Additionally or alternatively, the at least pitch wire may be connected to a location at the suction side part of the main frame that is chosen such that, due to the gravitational force acting on the center of gravity of the rotor blade, the chord line of the blade includes a second pitch angle with the vertical if the tilt wires are slack.

In other words, the lifting frame may be designed such that the gravitational pull to the rotor blade provides for a correct pitch angle when either the tilt wires or the at least one pitch wire are slack. Moreover, the pitch angle when the at least one pitch wire is slack differs from the pitch angle when the tilt wires are slack. Hence, it becomes possible to provide the two different pitch angles mentioned with respect to the inventive method just by gravitational pull to the rotor blade. This keeps the lifting frame rather simple.

In particular, the locations situated on the pressure side part of the main frame and the location at the suction side part of the main frame are chosen such that the second pitch angle is the first pitch angle plus 90°. This development is advantageous in a method in which the first two blades are mounted with a tilt angle of ±60°, respectively, and the third blade is mounted in the horizontal orientation with the nacelle rotated about the tower axis by 180°. In this case both tilt angles achievable with the lifting frame would resemble the same pitch angles of the rotor blades with respect to the mounting sections to which they are to be mounted.

In order to secure the rotor blade to the lifting frame the main frame may comprise a locking system for preventing the blade from slipping out of the main frame in case the main frame is tilted such that the tip end of the frame is located higher than the root end of the frame. Such a locking system may comprise a wire that is fixed to the root of the blade with its one end and to the lifting frame with its other end.

Further features, properties and advantages of the present invention will become clear from the following description of embodiments in conjunction with the accompanying drawings.
Figure 1 shows a lifting frame.
Figure 2 shows the lifting frame attached to a rotor blade on the ground.
Figure 3 shows the lifting frame of Figure 2 in a section along the line III-III in Figure 2.
Figure 4 shows the lifting frame with a rotor blade fixed thereto in an orientation according to a first tilt angle.
Figure 5 shows the lifting frame with a rotor blade fixed thereto in an orientation according to a first pitch angle.
Figure 6 shows the lifting frame with a rotor blade fixed thereto in an orientation according to a second tilt angle.
Figure 7 shows a securing wire securing the blade from slipping out of the lifting frame.
Figure 8 shows the lifting frame with a rotor blade fixed thereto in an orientation according to a second pitch angle.
Figure 9 shows a transport or local storage situation of the lifting frame.
Figure 10 schematically shows stages of mounting wind turbine rotor blades to a hub.
Figure 11 shows another stage of mounting wind turbine rotor blades to a hub.

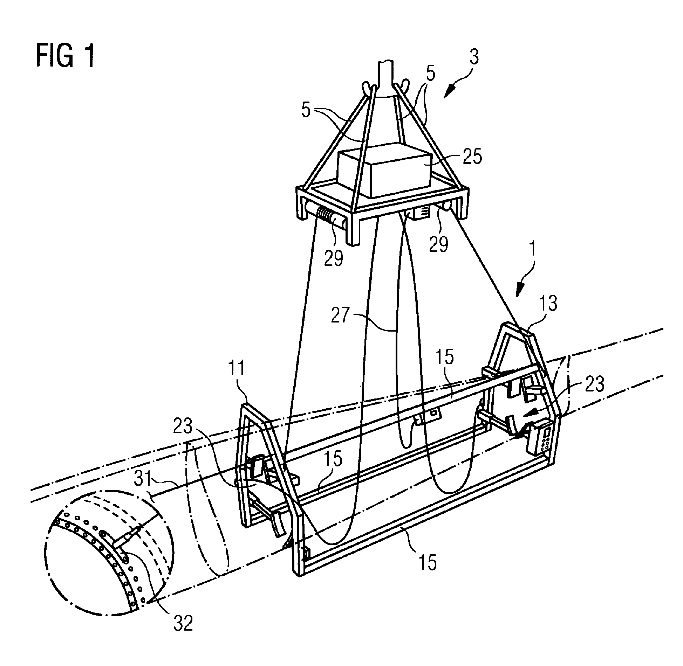

An embodiment for a lifting frame that is used for mounting wind turbine rotor blades to a hub premounted at a nacelle on top of a wind turbine tower is shown in Figure 1. The lifting frame of the shown embodiment comprises a main frame 1 and a sub frame 3.

The sub frame 3 is equipped with ropes 5 by which it can be fixed to a crane hook or the like. However, other means for fixing it to a crane hook or the like are also possible. The sub frame 3 is further equipped with a power supply 25 and, according to the shown embodiment, with two winches 29.

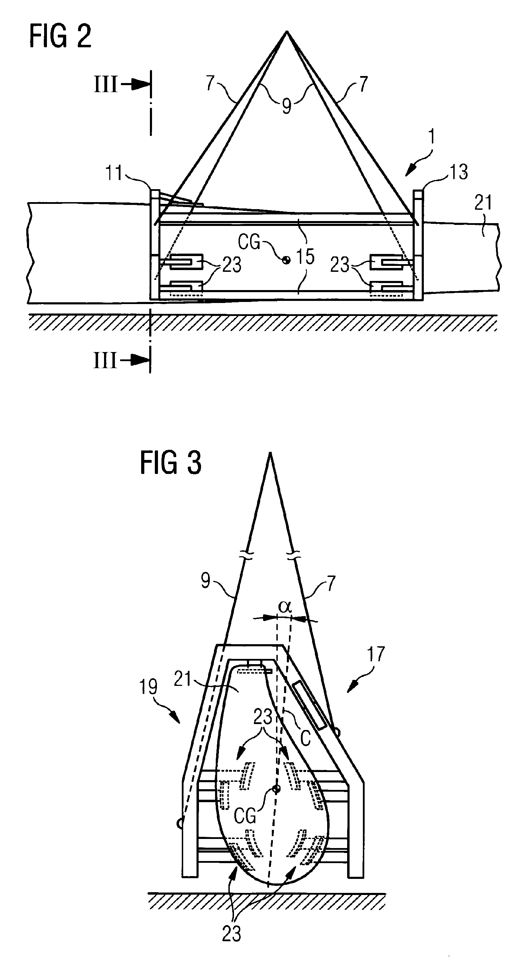

The main frame 1 is suspended from the sub frame 3 by means of four wires 7, 9 (two tilt wires 7 and tow pitch wires 9) the function of which will be described later. The main frame 1 has a root end 11 which shows towards the root of a rotor blade attached to the main frame (the rotor blade is shown in phantom lines in Figure 1) and a tip end 13 showing towards the tip of a rotor blade attached to the main frame 1. Root end 11 and tip end 13 are connected to each other by means of crossbars 15 two of which are located at the pressure side of a rotor blade touched to the main frame 1 and one of which is located at the suction side of a blade attached to the main frame 1. Hence, the main frame 1 can be notionally subdivided into the pressure side part 17 and a suction side part 19 (compare Figure 3). The tilt wires 7 and the pitch wires 9 are connected to the pressure side part 17 and the suction side part 19, respectively, at the ends of the main frame.

For holding a rotor blade 21 in the main frame 1 the main frame comprises a clamping system with clamps 23 located at the root end and at the tip end of the frame. In the present embodiment, the clamping system is electrically actuated. The power necessary for actuating the clamps 23 is provided by the power supply 25 located on the sub frame 3. Power is transferred from the power supply 25 to the clamping system by means a cable 27 extending between the sub frame 3 and the main frame 1.

The function of the wires by which the main frame 1 is connected to the sub frame 3 will be described with respect to Figures 2 to 8. Throughout these Figures only the main frame 1 and the wires 7, 9 by which it is connected to the sub frame 3 are show, while the sub frame itself is not shown.

Figures 2 and 3 show the main frame 1 after it has been attached to a wind turbine rotor blade 21 that rests on the ground. While Figure 2 shows the main frame 1 and the rotor blade 21 in a side view Figure 3 shows the main frame 1 and the rotor blade 21 in a sectional view according to the line III-III shown in Figure 2. As can be seen from the sectional view, the rotor blade 21 has a chord C that is a notional straight line connecting the leading edge of the blade with its trailing edge in the aerodynamic active airfoil region of the blade. The chord C is indicated in Figure 3. As can be seen, typically the chord of a rotor blade that rests on the ground includes a small angle α with the vertical. The actual angle depends on the shape of the rotor blades and may vary in a range between about ± 10°. In the present embodiment the angle is about -7°. For attaching the rotor blade 21 to the main frame 1 the main frame 1 is lowered onto the rotor blade by means of the crane used for mounting the rotor blades 21 to the hub. After the main frame 1 has been lowered onto the rotor blade 21 resting on the ground the clamping system is actuated to fix the rotor blade 21 to the main frame 1.

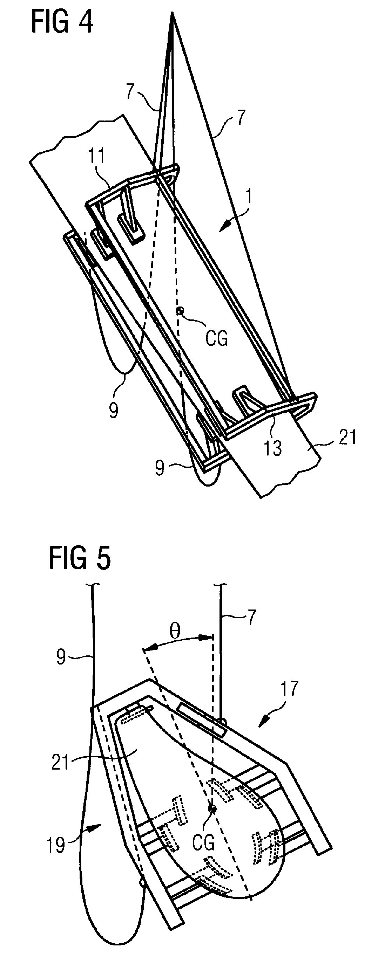

After fixing the rotor blade 21 to the main frame 1 the rotor blade is lifted by means of a crane to which the lifting frame is attached. When the rotor blade is lifted to a sufficient height the main frame 1 with the rotor blade 21 fixed thereto is tilted to a first tilt angle with respect to the horizontal as it is shown in Figure 4. In Figure 4 the tilt angle is about -60° which means that the root end 11 of the main frame 1 (and consequently the root of the rotor blade) shows upwards while the tip end 13 of the main frame 1 (and consequently the tip of the rotor blade 21) shows downwards.

The tilting is achieved by using the winches 29 located at the sub frame 3 (compare Figure 1) which can wind and unwind the tilt wires 7. For tilting the main frame 1 the tilt wire connecting the sub frame 3 to the end of the main frame 1 that shall show upwards is coiled while the wire connecting the sub frame 3 to the end of the main frame 1 that shall show downwards is uncoiled. The amount of coiling the one wire and the amount uncoiling the other wire determines the tilt angle of the main frame. In Figure 4 the tilt wire 7 connecting the sub frame 3 to the root end 11 of the main frame is coiled while the tilt wire 7 connecting the tip end 13 of the main frame 1 to the sub frame 3 is uncoiled. Although in the present embodiment one of the wires is coiled while the other one is uncoiled the tilting of the main frame 1 with the rotor blade 21 could also be achieved just by coiling the wire connected to the end of the main frame 1 that shall show upwards or just by uncoiling the wire that is connected to the end of the main frame 1 that shall show downwards. However, in this case longer wires would be necessary.

After the blade has been lifted to a sufficient height it is not only tilted but also pitched in the present embodiment. This means that the angle between the chord C of the rotor blade 21 and the vertical is changed. In the present embodiment, the angle is changed from about -7°, as it was when the blade rested on the ground, to a pitch angle θ₁ which is approximately 20°. Pitching the main frame 1 with the rotor blade 21 attached thereto is achieved by gravitational force acting on the center of gravity CG of the blade 21. This is possible because the locations at the main frame 1 to which the tilt wires 7 are attached are located on the pressure side part 17 of the main frame 1. The location is chosen such that the when the pitch wires 9 are slack (as it is shown in Figure 5) the gravitational force pulls the rotor blade 21 into a position that automatically sets the desired pitch angle θ₁. This is achieved in the present embodiment by simultaneously winding the tilt wires 7 with not altering the tilt angle until the pitch wires 9 are slack. Then, the center of gravity will become located below the point on the pressure side part 17 of the main frame 1 to which the tilt wires 7 are attached in the cross-section shown in Figure 5. Hence, by selecting the point to which the tilt wires 7 are connected to the main frame 1 a desired pitch angle θ₁ that sets itself due to gravitational force can be realized.

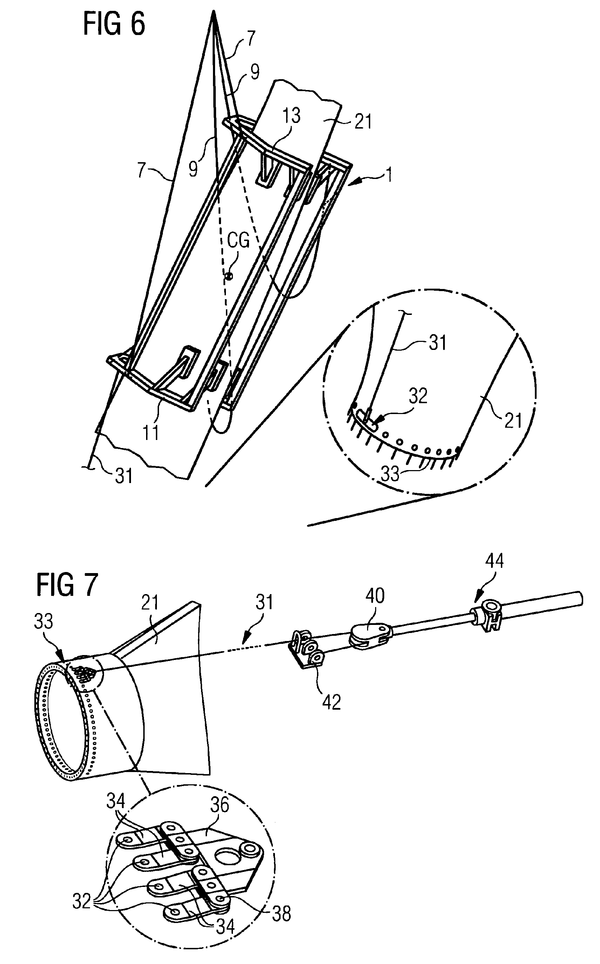

Figure 6 shows the main frame 1 with a wind turbine rotor blade 21 attached thereto in an orientation corresponding to a tilt angle of +60°. Like in the orientation shown in Figure 4 reducing the length of the tilt wires 7 (without changing the length of the tilt wire 7 connected to the root end 11 with respect to the tilt wire 7 connected to the tip end 13) until the pitch wires 9 are slack will lead to the pitch angle θ₁ shown in Figure 5.

In the orientation shown in Figure 6 the root end 11 of the main frame 1 shows downwards and, hence, also the root of the rotor blade 21 shows downwards. On the other hand, the tip end 13 of the main frame 1 and hence the tip of the rotor blade 21, shows upwards. However, since the blade dimensions becomes smaller from the root end 11 to the tip end 13 of the main frame 1 there could be a risk that the rotor blade 21 slips out of the main frame 1 if the clamps 23 do not clamp the rotor blade 21 tight enough. To prevent the blade 21 from slipping out of the main frame 1 a securing wire 31 extends from the main frame to the root 33 of the blade 21. Blade bolt bushings 32 are present at the root end of the securing wire 31 which can be secured to the blade root 33 by means of bolts. The opposite end of the securing wire 31 may be attached to a winch, a jack or any other means for setting the length of the securing wire 31. This means for adjusting the length of the securing wire is fixed to the main frame 1.

A more detailed illustration of the securing wire 31 is shown in Figure 7. Each blade bolt bushing 32 is located at the end of an elongated member 34 that is connected to a bracket 36 to which the securing wire 31 is fixed. The bracket 36 helps to evenly distribute the force of the securing wire 31 over the blade bolt bushings 32. Preferably, the elongated members are articulated to traverse members 38 which in turn are articulated to the bracket 36 to further assist in evenly distributing the force of the securing wire 31 over the blade bolt bushings 32. The other end of the securing wire 31 is wound around a pulley 40 and fixed to a load pin arrangement 42 that is located at the main frame 1. The pulley 40 is located at one end of a screw jack 44 the other end of which is also fixed to the main frame 1. The load pin arrangement 42, the pulley 40 and the screw jack 44 form a means for adjusting the length of the securing wire 31 which allows for tightening the securing wire 31 once it is fixed to the blade root 33. The tightening action can be performed remotely by electric, hydraulic or pneumatic means.

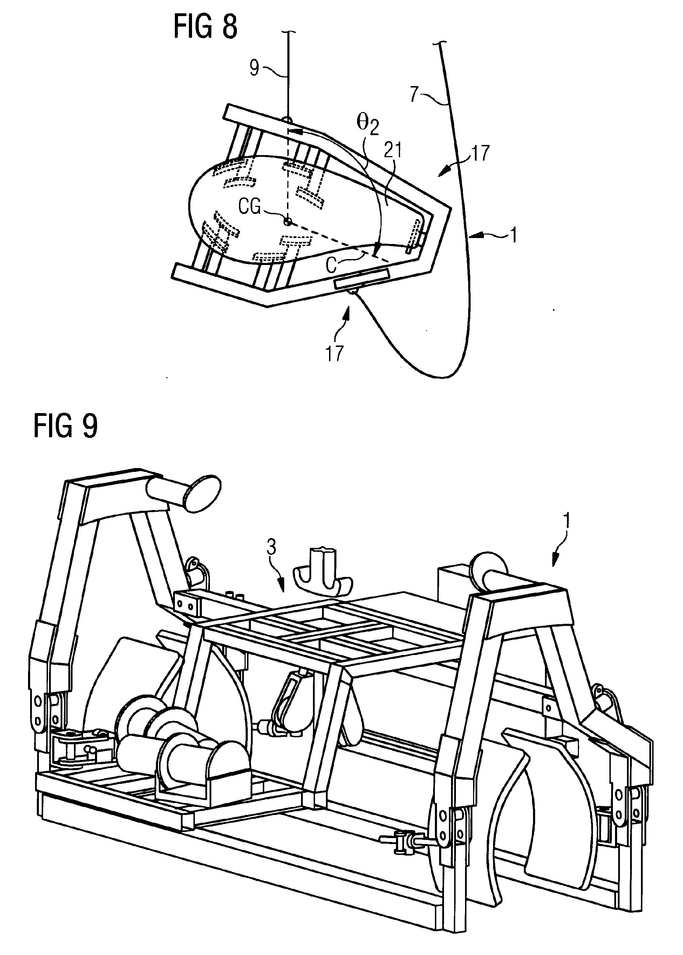

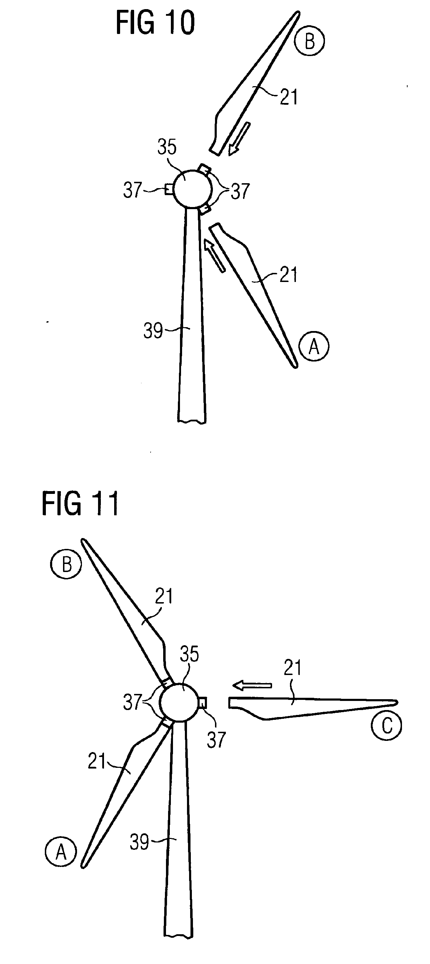

A second pitch angle θ₂ can be set by use of the gravitational pull on the center of gravity CG of the blade 21 by coiling the pitch wires 9 by means of at least one coil located on the sub frame 3 until the tilt wires 7 are slack. In the present embodiment the blade orientation will be kept parallel to the horizontal when the pitch wires 9 are coiled until the tilt wires are slack. The pitch angle θ₂ will then be 110°. Please note that compared to Figure 5 Figure 8 shows the rotor blade 21 from the opposite side. The view onto the section of the rotor blade shown in Figure 5 resembles a view from behind the sectional plane of Figure 8. The reason therefore will be explained later with respect to Figures 10 and 11, which show different steps of mounting three wind turbine rotor blades 21 to a rotor hub 35 at a nacelle located on the top of a wind turbine tower 39.

As has been described earlier the blade installation system is divided into a main frame 1 and a sub frame 3 with the power supply 25 and winches 29 (power pack frame). This is advantageous as the system becomes lighter and cheaper and is easier to handle and to transport due to a decreased size. This can be seen in Figure 9 which shows a transportation or local storage situation where the power pack frame 3 is at least partly placed within the main frame 1. It is also easier to access and maintain the power supply 25 of the power pack frame 3 if the blade installation system is divided into a main frame 1 and a power pack frame 3.

Figure 10 shows how the first two rotor blades 21 are mounted to the rotor hub 35. For mounting the rotor blades 21 to mounting sections 37 of the hub 35 the hub will be fixed and secured against rotation about the rotor axis with the mounting sections 37 showing in a direction parallel to the horizontal, upwards by 60° and downwards by 60°, respectively. Since the rotor hub 35 is fixed the blades 21 need to be tilted such that they can be mounted to the respective mounting section 37. Furthermore, the blades 21 are pitched to adapt their pitch angle to the pitch angle of the respective mounting section 37.

In the present embodiment, the first blade, indicated by an A in Figure 10, will be tilted and pitched as shown in Figures 4 and 5 and then mounted to its mounting section 37. Next, the second blade, indicated by B in Figure 10, is tilted as shown in Figure 6, pitched as shown in Figure 5 and mounted to its mounting section 37 at the rotor hub 35. Lifting the rotor blades is done by means of a crane (not shown) to which the sub frame 3 of the inventive lifting frame is attached. Tilting and pitching is done by using the winches at the sub frame for setting the lengths of the wires so as to achieve the desired tilt and pitch angles.

In a next step, the nacelle with the rotor hub 35 and the first two blades mounted thereto is rotated by 180° about the tower axis. The orientation after this rotation is shown in Figure 11. Rotating the nacelle is done in order to allow the last blade, indicated by C in Figure 11, to be mounted from the same side as the first two blades. By this measure moving the crane to the other side of the wind turbine can be avoided.

The third rotor blade is then lifted and kept in horizontal orientation for mounting it to the respective mounting section 37. In addition, it is pitched to the pitch angle shown in Figure 8 to adapt its pitch angle to the pitch angle of the mounting section 37. Then, the blade 21 is mounted to the hub 35.

Please note that Figures 10 and 11 show the mounting of the rotor blades in a very schematic view without depicting the correct pitch of the blades.

The lifting frame that has been illustrated with respect to a concrete embodiment of the invention allows for mounting all wind turbine rotor blades of a wind turbine to the rotor hub with the rotor hub being fixed and secured against rotation about the rotor axis. This is particularly useful for mounting wind turbine rotor blades to rotor hubs of gearless direct drive wind turbines.

Although the present invention has been illustrated by means of special embodiments the invention shall not be restricted to these embodiments since deviations therefrom are possible. For example, two pitch wires are used in the described embodiment. However, it would be possible to use only one pitch wire. In this case, a cross beam could be present at the suction side of the main frame 1. The single pitch wire would then be connected to a location of the crossbeam between the root end and the tip end of the main frame 1. The exact location of the crossbeam would be chosen in view of the pitch angle that is to be achieved by the gravitational pull when the tilt wires are slack. Moreover, mounting the wind turbine rotor blades shall not be restricted to the order shown in Figures 10 and 11. For example, one could first mount the rotor blade 21 indicated by C in Figure 11 and then mount the rotor blades indicated by A and B in Figure 10 in any order. In addition, if the rotor blades indicated by A and B in Figure10 are mounted first the order of mounting the blades could be reversed.

Since deviations of the exemplary embodiments described with respect to the Figures are possible the scope of protection of the present invention shall be defined by the appended claims and not restricted to special embodiments of the invention.

## Claims

1. A method of mounting wind turbine rotor blades (21) to a rotor hub (35) with blade mounting sections (37) while the rotor hub (35) is already mounted to a nacelle located at the top of a wind turbine tower (39), in which
- the rotor hub (35) is kept in a same fixed rotational position for all rotor blades (21) and the rotor blades (21) are tilted by individual tilt angles for mounting them to the mounting sections (37) of the rotor hub (35), the method comprising the steps of:
a) lifting the first rotor blade (21) from the ground;
b) tilting the first rotor blade (21) by approximately +60° or -60° with respect to the horizontal;
c) fixing the first rotor blade (21) to the wind turbine hub with the blade being tilted by approximately +60° or -60° with respect to the horizontal;
d) lifting the second rotor blade (21) from the ground;
e) tilting the second rotor blade (21) by approximately -60° with respect to the horizontal if the fist rotor blade (21) was tilted by approximately +60° with respect to the horizontal, or tilting the second rotor blade (21) by approximately +60° with respect to the horizontal if the first rotor blade (21) was tilted by approximately -60° with respect to the horizontal;
f) fixing the second rotor blade (21) to the wind turbine hub (35) with the blade being tilted by approximately -60° or +60° with respect to the horizontal;
g) lifting the third rotor blade (21) from the ground;
h) fixing the third rotor blade (21) to the wind turbine hub with the rotor blade (21) being substantially aligned with the horizontal,
wherein the nacelle is rotated about a yaw angle of 180° before the third rotor blade (21) is mounted to the rotor hub (35)
**characterized in that**
each rotor blade (21) is pitched after lifting it from the ground to a certain pitch angle (θ₁, θ₂), wherein the first and second rotor blades (21) are pitched to a first pitch angle (θ₁) of 20° with respect to the vertical and the third blade (21) is pitched to a second pitch angle (θ₂) of 110° with respect to the vertical.

2. A lifting frame (1,3) for lifting a wind turbine rotor blade to a rotor hub (35) by use of a lifting device, the lifting frame (1,3) comprising:
- a main frame (1) with a fixture (23) for fixing a wind turbine rotor blade (21) to the main frame (1), the main frame (1) having a root end (11) showing towards the root of a rotor blade (21) fixed to the main frame and a tip end (13) showing towards the tip of a rotor blade (21) fixed to the main frame (1);
- a sub frame (3) with means for fixing the sub frame (3) to a lifting device; and
- at least two tilt wires (7) that extend from the sub frame (3) to the main frame (1), at least one of the tilt wires (7) being connected to a location at the tip end (13) of the main frame (1) and at least an other one of the tilt wires (7) being connected to a location at the root end (11) of the main frame (1), where the length of the at least one tilt wire (7) connected to a location at the root end (11) and the length of the at least one tilt wire (7) connected to a location at the tip end (13) are adjustable relative to each other, **characterized in that**
- the main frame (1) comprises a suction side part (19) located at the suction side of a rotor blade (21) fixed to the main frame (1), and
- at least on pitch wire (9) is present, which extends from the sub frame (3) to the main frame (1) and which is connected to a location at the suction side part (19) of the main frame (1).

3. The lifting frame (1,3) as claimed in claim 2, in which the sub frame (3) comprises a winch arrangement (29) that is operatively connected at least to the tilt wire or tilt wires connected to a location at the root end (11) of the main frame (1) or at least to the tilt wire (7) or tilt wires connected to a location at the tip end (13) of the main frame (1).

4. The lifting frame (1,3) as claimed in claim 3, in which the winch arrangement comprises two winches (29), one of which is operatively connected to the tilt wire (7) or tilt wires connected to the location at the root end (11) of the main frame (1) and the other one of which is operatively connected to the tilt wire (7) or tilt wires connected to a location at the tip end (13) of the main frame (1).

5. The lifting frame (1,3) as claimed in any of the claims 2 to 4, in which the main frame (1) further comprises a pressure side part (17) and the location at the root end (11) of the main frame (1) and the location at the tip end (13) of the main frame (1) to which the tilt wires (7) are connected are situated on the pressure side part (17) of the main frame (1).

6. The lifting frame (1,3) as claimed in any of the claims 2 to 5, in which
- shapes and dimensions of the main frame (1) and of the fixture are such that the main frame (1) can hold a rotor blade (21) with the center of gravity (CG) of the rotor blade (21) being located between the root end (11) of the main frame (1) and the tip end (13) of the main frame (1), and
- the locations situated on the pressure side part (17) of the main frame (1) are chosen such that, due to the gravitational force acting on the center of gravity (CG) of the rotor blade (21), the chord line (C) of the rotor blade (21) includes a first pitch angle (θ₁) with the vertical if the at least one pitch wire (9) is slack, and/or
- the at least one pitch wire (9) is connected to a location at the suction side part (19) of the main frame (1) that is chosen such that, due to the gravitational force acting on the center of gravity (CG) of the rotor blade (21), the chord line of the blade includes a second pitch angle (θ₂) with the vertical if the tilt wires (7) are slack.

7. The lifting frame (1,3) as claimed in claim 6, in which the locations situated on the pressure side part (17) of the main frame (1) and the location at the suction side part (19) of the main frame (1) are chosen such that the second pitch angle (θ₂) is the first pitch angle (θ₁) plus 90 degree.

8. The lifting frame (1,3) as claimed in claim 7, in which the locations situated on the pressure side part (17) of the main frame (1) and the location at the suction side part (19) of the main frame (1) are chosen such that the first pitch angle (θ₁) is 20 degree and the second pitch angle (θ₂) is 110 degree.

9. The lifting frame (1,3) as claimed in any of the claims 2 to 8, in which the main frame (1) comprises a locking system (31,32) for preventing the rotor blade (21) from slipping out of the main frame (1) in case the main frame (1) is tilted such that the tip end (13) of the main frame (1) is located higher than the root end (11) of the main frame (1).

## Patentansprüche

1. Verfahren zum Anbringen von Windenergieanlagen-Rotorblättern (21) an einer Rotornabe (35) mit Rotorblatt-Montageabschnitten (37), während die Rotornabe (35) bereits an einer an der Spitze eines Windenergieanlagenturms (39) angeordneten Gondel angebracht ist, wobei
- die Rotornabe (35) in ein und derselben festen Drehposition für alle Rotorblätter (21) gehalten wird und die Rotorblätter (21) um individuelle Neigungswinkel geneigt werden, um sie an den Montageabschnitten (37) der Rotornabe (35) anzubringen, wobei das Verfahren die folgenden Schritte umfasst:
a) Abheben des ersten Rotorblattes (21) vom Boden;
b) Neigen des ersten Rotorblattes (21) um ungefähr +60° oder-60° bezüglich der Horizontalen;
c) Befestigen des ersten Rotorblattes (21) an der Windenergieanlagennabe, wobei das Rotorblatt um ungefähr +60° oder -60° bezüglich der Horizontalen geneigt ist;
d) Abheben des zweiten Rotorblattes (21) vom Boden;
e) Neigen des zweiten Rotorblattes (21) um ungefähr -60° bezüglich der Horizontalen, falls das erste Rotorblatt (21) um ungefähr +60° bezüglich der Horizontalen geneigt wurde, oder Neigen des zweiten Rotorblattes (21) um ungefähr +60° bezüglich der Horizontalen, falls das erste Rotorblatt (21) um ungefähr -60° bezüglich der Horizontalen geneigt wurde;
f) Befestigen des zweiten Rotorblattes (21) an der Windenergieanlagennabe (35), wobei das Rotorblatt um ungefähr -60° oder +60° bezüglich der Horizontalen geneigt ist;
g) Abheben des dritten Rotorblattes (21) vom Boden;
h) Befestigen des dritten Rotorblattes (21) an der Windenergieanlagennabe, wobei das Rotorblatt (21) im Wesentlichen horizontal ausgerichtet ist,
wobei die Gondel um einen Gierwinkel von 180° gedreht wird, bevor das dritte Rotorblatt (21) an der Rotornabe (35) angebracht wird,
**dadurch gekennzeichnet, dass**
jedes Rotorblatt (21), nachdem es vom Boden abgehoben wurde, auf einen gewissen Anstellwinkel (θ₁, θ₂) angestellt wird, wobei das erste und das zweite Rotorblatt (21) auf einen ersten Anstellwinkel (θ₁) von 20° bezüglich der Vertikalen angestellt werden und das dritte Rotorblatt (21) auf einen zweiten Anstellwinkel (θ₂) von 110° bezüglich der Vertikalen angestellt wird.

2. Hubrahmen (1, 3) zum Heben eines Windenergieanlagen-Rotorblattes zu einer Rotornabe (35) unter Verwendung einer Hubvorrichtung, wobei der Hubrahmen (1, 3) umfasst:
- einen Hauptrahmen (1) mit einer Haltevorrichtung (23) zum Befestigen eines Windenergieanlagen-Rotorblattes (21) an dem Hauptrahmen (1), wobei der Hauptrahmen (1) ein Fußende (11), das dem Fuß eines an dem Hauptrahmen befestigten Rotorblattes (21) zugewandt ist, und ein Spitzenende (13), das der Spitze eines an dem Hauptrahmen (1) befestigten Rotorblattes (21) zugewandt ist, aufweist;
- einen Unterrahmen (3) mit Mitteln zum Befestigen des Unterrahmens (3) an einer Hubvorrichtung; und
- mindestens zwei Neigungsseile (7), welche sich vom Unterrahmen (3) zum Hauptrahmen (1) erstrecken, wobei mindestens eines der Neigungsseile (7) mit einem Ort am Spitzenende (13) des Hauptrahmens (1) verbunden ist und mindestens ein weiteres der Neigungsseile (7) mit einem Ort am Fußende (11) des Hauptrahmens (1) verbunden ist, wobei die Länge des mindestens einen Neigungsseils (7), das mit einem Ort am Fußende (11) verbunden ist, und die Länge des mindestens einen Neigungsseils (7), das mit einem Ort am Spitzenende (13) verbunden ist, relativ zueinander einstellbar sind,
**dadurch gekennzeichnet, dass**
- der Hauptrahmen (1) einen Saugseitenteil (19) umfasst, der auf der Saugseite eines an dem Hauptrahmen (1) befestigten Rotorblattes (21) angeordnet ist, und
- mindestens ein Pitchseil (9) vorhanden ist, welches sich vom Unterrahmen (3) zum Hauptrahmen (1) erstreckt und welches mit einem Ort am Saugseitenteil (19) des Hauptrahmens (1) verbunden ist.

3. Hubrahmen (1, 3) nach Anspruch 2, wobei der Unterrahmen (3) eine Windenanordnung (29) umfasst, welche mindestens mit dem Neigungsseil oder den Neigungsseilen, das (die) mit einem Ort am Fußende (11) des Hauptrahmens (1) verbunden ist (sind), oder mindestens mit dem Neigungsseil (7) oder den Neigungsseilen, das (die) mit einem Ort am Spitzenende (13) des Hauptrahmens (1) verbunden ist (sind), in Wirkverbindung steht.

4. Hubrahmen (1, 3) nach Anspruch 3, wobei die Windenanordnung zwei Winden (29) umfasst, von denen eine mit dem Neigungsseil (7) oder den Neigungsseilen, das (die) mit dem Ort am Fußende (11) des Hauptrahmens (1) verbunden ist (sind), in Wirkverbindung steht, und von denen die andere mit dem Neigungsseil (7) oder den Neigungsseilen, das (die) mit einem Ort am Spitzenende (13) des Hauptrahmens (1) verbunden ist (sind), in Wirkverbindung steht.

5. Hubrahmen (1, 3) nach einem der Ansprüche 2 bis 4, wobei der Hauptrahmen (1) ferner einen Druckseitenteil (17) umfasst und der Ort am Fußende (11) des Hauptrahmens (1) und der Ort am Spitzenende (13) des Hauptrahmens (1), mit welchem die Neigungsseile (7) verbunden sind, sich am Druckseitenteil (17) des Hauptrahmens (1) befinden.

6. Hubrahmen (1, 3) nach einem der Ansprüche 2 bis 5, wobei
- Formen und Abmessungen des Hauptrahmens (1) und der Haltevorrichtung so beschaffen sind, dass der Hauptrahmen (1) ein Rotorblatt (21) so halten kann, dass der Schwerpunkt (CG) des Rotorblattes (21) zwischen dem Fußende (11) des Hauptrahmens (1) und dem Spitzenende (13) des Hauptrahmens (1) angeordnet ist, und
- die Orte, die sich am Druckseitenteil (17) des Hauptrahmens (1) befinden, so gewählt sind, dass infolge der auf den Schwerpunkt (CG) des Rotorblattes (21) wirkenden Schwerkraft die Profilsehne (C) des Rotorblattes (21) einen ersten Anstellwinkel (θ₁) mit der Vertikalen einschließt, falls das mindestens eine Pitchseil (9) schlaff ist, und/oder
- das mindestens eine Pitchseil (9) mit einem Ort am Saugseitenteil (19) des Hauptrahmens (1) verbunden ist, welcher so gewählt ist, dass infolge der auf den Schwerpunkt (CG) des Rotorblattes (21) wirkenden Schwerkraft die Profilsehne des Rotorblattes (21) einen zweiten Anstellwinkel (θ₂) mit der Vertikalen einschließt, falls die Neigungsseile (7) schlaff sind.

7. Hubrahmen (1, 3) nach Anspruch 6, wobei die Orte, die sich am Druckseitenteil (17) des Hauptrahmens (1) befinden, und der Ort am Saugseitenteil (19) des Hauptrahmens (1) so gewählt sind, dass der zweite Anstellwinkel (θ₂) gleich dem ersten Anstellwinkel (θ₁) plus 90 Grad ist.

8. Hubrahmen (1, 3) nach Anspruch 7, wobei die Orte, die sich am Druckseitenteil (17) des Hauptrahmens (1) befinden, und der Ort am Saugseitenteil (19) des Hauptrahmens (1) so gewählt sind, dass der erste Anstellwinkel (θ₁) 20 Grad beträgt und der zweite Anstellwinkel (θ₂) 110 Grad beträgt.

9. Hubrahmen (1, 3) nach einem der Ansprüche 2 bis 8, wobei der Hauptrahmen (1) ein Verriegelungssystem (31, 32) umfasst, um zu verhindern, dass das Rotorblatt (21) aus dem Hauptrahmen (1) hinausrutscht, falls der Hauptrahmen (1) so geneigt wird, dass das Spitzenende (13) des Hauptrahmens (1) höher als das Fußende (11) des Hauptrahmens (1) angeordnet ist.

## Revendications

1. Procédé de montage de pales (21) de rotor d'éolienne sur un moyeu (35) de rotor avec des sections (37) de montage de pales alors que le moyeu (35) de rotor est déjà monté sur une nacelle située au sommet d'une tour (39) d'éolienne, dans lequel
- le moyeu (35) de rotor est maintenu dans une même position fixe en rotation pour toutes les pales (21) de rotor et les pales (21) de rotor sont inclinées selon des angles d'inclinaison individuels pour les monter sur les sections (37) de montage du moyeu (35) de rotor, le procédé comprenant les étapes de :
a) levage de la première pale (21) de rotor à partir du sol ;
b) inclinaison de la première pale (21) de rotor à approximativement +60° ou -60° par rapport à l'horizontale ;
c) fixation de la première pale (21) de rotor sur le moyeu d'éolienne avec la pale étant inclinée à approximativement +60° ou -60° par rapport à l'horizontale ;
d) levage de la deuxième pale (21) de rotor à partir du sol ;
e) inclinaison de la deuxième pale (21) de rotor à approximativement -60° par rapport à l'horizontale si la première pale (21) de rotor était inclinée à approximativement +60° par rapport à l'horizontale, ou inclinaison de la deuxième pale (21) de rotor à approximativement +60° par rapport à l'horizontale si la première pale (21) de rotor était inclinée à approximativement -60° par rapport à l'horizontale ;
f) fixation de la deuxième pale (21) de rotor sur le moyeu (35) d'éolienne avec la pale étant inclinée à approximativement -60° ou +60° par rapport à l'horizontale ;
g) levage de la troisième pale (21) de rotor à partir du sol ;
h) fixation de la troisième pale (21) de rotor sur le moyeu d'éolienne avec la pale (21) de rotor étant sensiblement alignée avec l'horizontale,
dans lequel la nacelle est tournée d'environ un angle de lacet de 180° avant que la troisième pale (21) de rotor ne soit montée sur le moyeu (35) de rotor
**caractérisé en ce que**
chaque pale (21) de rotor est inclinée longitudinalement après son levage à partir du sol à un certain angle d'inclinaison longitudinale (θ₁, θ₂), dans lequel les première et deuxième pales (21) de rotor sont inclinées longitudinalement à un premier angle d'inclinaison longitudinale (θ₁) de 20° par rapport à la verticale et la troisième pale (21) est inclinée longitudinalement à un deuxième angle d'inclinaison longitudinale (θ₂) de 110° par rapport à la verticale.

2. Cadre de levage (1, 3) pour lever une pale de rotor d'éolienne jusqu'à un moyeu (35) de rotor en utilisant un dispositif de levage, le cadre de levage (1, 3) comprenant :
- un cadre principal (1) avec un système de fixation (23) pour fixer une pale (21) de rotor d'éolienne au cadre principal (1), le cadre principal (1) ayant une extrémité d'emplanture (11) orientée vers l'emplanture d'une pale (21) de rotor fixée au cadre principal et une extrémité de pointe (13) orientée vers la pointe d'une pale (21) de rotor fixée au cadre principal (1) ;
- un sous-cadre (3) avec des moyens pour fixer le sous-cadre (3) à un dispositif de levage ; et
- au moins deux câbles d'inclinaison (7) qui s'étendent du sous-cadre (3) jusqu'au cadre principal (1), au moins un des câbles d'inclinaison (7) étant connecté sur un emplacement au niveau de l'extrémité de pointe (13) du cadre principal (1) et au moins un autre des câbles d'inclinaison (7) étant connecté sur un emplacement au niveau de l'extrémité d'emplanture (11) du cadre principal (1), où la longueur de l'au moins un câble d'inclinaison (7) connecté sur un emplacement au niveau de l'extrémité d'emplanture (11) et la longueur de l'au moins un câble d'inclinaison (7) connecté sur un emplacement au niveau de l'extrémité de pointe (13) sont ajustables l'une par rapport à l'autre,
**caractérisé en ce que**
- le cadre principal (1) comprend une partie (19) de côté d'aspiration située sur le côté d'aspiration d'une pale (21) de rotor fixée sur le cadre principal (1), et
- au moins un câble d'inclinaison longitudinale (9) est présent, qui s'étend du sous-cadre (3) jusqu'au cadre principal (1) et qui est connecté sur un emplacement au niveau de la partie (19) de côté d'aspiration du cadre principal (1).

3. Cadre de levage (1, 3) selon la revendication 2, dans lequel le sous-cadre (3) comprend un agencement de treuils (29) qui est opérationnellement connecté au moins au câble d'inclinaison ou aux câbles d'inclinaison connecté(s) sur un emplacement au niveau de l'extrémité d'emplanture (11) du cadre principal (1) ou au moins au câble d'inclinaison (7) ou aux câbles d'inclinaison connecté(s) sur un emplacement au niveau de l'extrémité de pointe (13) du cadre principal (1).

4. Cadre de levage (1, 3) selon la revendication 3, dans lequel l'agencement de treuils comprend deux treuils (29), dont un est opérationnellement connecté au câble d'inclinaison (7) ou aux câbles d'inclinaison connecté(s) sur l'emplacement au niveau de l'extrémité d'emplanture (11) du cadre principal (1) et dont l'autre est opérationnellement connecté au câble d'inclinaison (7) ou aux câbles d'inclinaison connecté(s) sur un emplacement au niveau de l'extrémité de pointe (13) du cadre principal (1).

5. Cadre de levage (1, 3) selon l'une quelconque des revendications 2 à 4, dans lequel le cadre principal (1) comprend en outre une partie (17) de côté de pression et l'emplacement au niveau de l'extrémité d'emplanture (11) du cadre principal (1) et l'emplacement au niveau de l'extrémité de pointe (13) du cadre principal (1) auxquels les câbles d'inclinaison (7) sont connectés sont situés sur la partie (17) de côté de pression du cadre principal (1).

6. Cadre de levage (1, 3) selon l'une quelconque des revendications 2 à 5, dans lequel
- des formes et dimensions du cadre principal (1) et du système de fixation sont telles que le cadre principal (1) peut contenir une pale (21) de rotor avec le centre de gravité (CG) de la pale (21) de rotor étant situé entre l'extrémité d'emplanture (11) du cadre principal (1) et l'extrémité de pointe (13) du cadre principal (1), et
- les emplacements situés sur la partie (17) de côté de pression du cadre principal (1) sont choisis de telle sorte que, du fait de la force de gravitation agissant sur le centre de gravité (CG) de la pale (21) de rotor, la ligne de corde (C) de la pale (21) de rotor inclut un premier angle d'inclinaison longitudinale (θ₁) avec la verticale si l'au moins un câble d'inclinaison longitudinale (9) est mou, et/ou
- l'au moins un câble d'inclinaison longitudinale (9) est connecté sur un emplacement au niveau de la partie (19) de côté d'aspiration du cadre principal (1) qui est choisi de telle sorte que, du fait de la force de gravitation agissant sur le centre de gravité (CG) de la pale (21) de rotor, la ligne de corde de la pale inclut un deuxième angle d'inclinaison longitudinale (θ₂) avec la verticale si les câbles d'inclinaison (7) sont mous.

7. Cadre de levage (1, 3) selon la revendication 6, dans lequel les emplacements situés sur la partie (17) de côté de pression du cadre principal (1) et l'emplacement au niveau de la partie (19) de côté d'aspiration du cadre principal (1) sont choisis de telle sorte que le deuxième angle d'inclinaison longitudinale (θ₂) est le premier angle d'inclinaison longitudinale (θ₁) plus 90 degrés.

8. Cadre de levage (1, 3) selon la revendication 7, dans lequel les emplacements situés sur la partie (17) de côté de pression du cadre principal (1) et l'emplacement au niveau de la partie (19) de côté d'aspiration du cadre principal (1) sont choisis de telle sorte que le premier angle d'inclinaison longitudinale (θ₁) est 20 degrés et le deuxième angle d'inclinaison longitudinale (θ₂) est 110 degrés.

9. Cadre de levage (1, 3) selon l'une quelconque des revendications 2 à 8, dans lequel le cadre principal (1) comprend un système de verrouillage (31, 32) pour empêcher la pale (21) de rotor de glisser hors du cadre principal (1) dans le cas où le cadre principal (1) est incliné de telle manière que l'extrémité de pointe (13) du cadre principal (1) est située plus haut que l'extrémité d'emplanture (11) du cadre principal (1).
